# EUROPÄISCHE PATENTSCHRIFT

(11) **EP 1 431 700 B1**
(45) Veröffentlichungstag und Bekanntmachung des Hinweises auf die Patenterteilung: **14.05.2008**
(21) Anmeldenummer: 03022464.6
(22) Anmeldetag: 08.10.2003
(51) Int. Cl.: F41H 7/02, B60G 7/02

(54) **Minenschutzeinrichtung insbesondere für Radfahrzeuge**
Mine protection device especially for wheeled vehicles
Dispositif de protection contre des mines spécialement pour des véhicules à roues

(30) Priorität: 20.12.2002 DE 10259918
(43) Veröffentlichungstag der Anmeldung: 23.06.2004
(73) Patentinhaber: Rheinmetall Landsysteme GmbH, 24107 Kiel (DE)
(72) Erfinder: Grosch, Hermann, Dr., 29336 Nienhagen (DE)
(74) Vertreter: Dietrich, Barbara

(56) Entgegenhaltungen:
- WO-A-02/47958
- DE-A- 3 220 007
- US-A- 4 548 290
- US-B1- 6 420 803
- DATABASE WPI Section PQ, Week 200301 Derwent Publications Ltd., London, GB; Class Q11, AN 2003-012140 XP002275628 & KR 2002 050 608 A (HYUNDAI MOTOR CO LTD) 27. Juni 2002 (2002-06-27)

## Beschreibung

Die vorhandenen technischen Möglichkeiten, die Besatzung vor Verletzungen durch über die Struktur eingeleitete Schockwellen zu schützen, basieren auf dem Prinzip, die Besatzung über geeignete Dämpfungseinrichtungen von der Fahrzeuginnenstruktur zu entkoppeln. Das geht von einer Vorrichtung zum Schutz vor Mineneinwirkung wie aus der DE 199 35 573 A1 bekannt bis hin zu Sitzen, die über Dämpfungselemente so mit der Fahrzeugstruktur verbunden sind, dass der Anteil der Schockwelle, die noch in den Sitz eingeleitet wird, deutlich reduziert ist. Die Vorrichtung aus der DE 199 35 573 A1 ist als ein bedarfsweise am Fahrzeug montierbarer, im wesentlichen unter dem Fahrzeug anzuordnender Bausatz ausgeführt, der aus Fahroder Laufwerkskomponenten aufnehmenden Profilträgern und einer fahrzeugabgewandten , an die Profilträger anschließenden Schutzeinrichtung besteht. Im Bereich zwischen den Profilträgern ist die Schutzeinrichtung abstützfrei und zum Fahrzeugboden beabstandet ausgeführt.

Weitere Schutzmaßnahmen sind Zusatzpanzerungen. Eine Minenschutzvorrichtung dieser Art beschreibt die DE 197 34 950 C2. Diese weist einen besonderen Schichtaufbau aus, der da besteht aus einer ersten Hartschaumschicht, einer ein- oder mehrschichtigen Strukturelementenplatte, einer weiteren Hartschaumschicht und einer druckfesten, biegesteifen Platte.

Des Weiteren wird ein weiterer Schutz dadurch erreicht, dass der Boden so ausgeführt wird, dass er Energie durch Verformung absorbieren kann, ohne zu reißen. Auch die Geometrie des Fahrgestells wird häufig auf Minenschutz hin optimiert (WO 02/47958).

Dort ist auch die Abtrennung der Räder durch Scherstifte gezeigt.

Die Erfindung stellt sich die Aufgabe, die Einleitung der Schockwelle einer Mine in die Fahrwerksstruktur und von dort in das Fahrzeug zu verhindern. Ein auftretender Schaden soll dabei so minimiert werden, dass eine Reparatur auch vor Ort möglich wird.

Gelöst wird die Aufgabe durch die Merkmale des Patentanspruchs 1.

Der Erfindung liegt der Gedanke zugrunde, dass die Auslösung einer Mine unter dem Fahrzeug insbesondere durch den Überlauf eines Rades oder dergleichen durch einen Sensor unmittelbar zu detektieren. Die Detonation der Mine ist in der Regel mit einem intensiven Lichtblitz verbunden, der durch einen optischen Sensor auch aus größerer Distanz ohne zeitlichen Verzug detektiert werden kann. Alternativ können auch Druck- und / oder Beschleunigungssensoren verwendet werden. Diese detektieren eine Schockwelle / Körperschallwelle bzw. Blastwelle. Das so gewonnene Detektionssignal wird von einer Zünd- und Auswerteeinheit erfaßt, die an ein pyrotechnisches Trennelement angeschlossen ist, welche durch das Signal der Einheit aktiviert wird. Die Trennstelle ist so ausgeführt, dass eine Trennung zur vollständigen Loslösung der Radbaugruppe bzw. des Rades von der Fahrzeugstruktur führt und die Abtrennung der Aufhängung bereits erfolgt ist, wenn die Körperschallwellen (Schockwelle) die Trennstelle erreicht hat. Die Trennstelle ist dabei so gelegt, dass der Anbau einer Ersatzbaugruppe besonders einfach ausführbar ist. Die pyrotechnische Trennung der Tragstruktur kann durch eine Schneidladung oder durch geeignete Ausführungen der Trennstelle mittels pyrotechnischen Trennschrauben erfolgen.
Je nach Konstruktion des Fahrzeugs können derartige Trennungen auch an weiteren Stellen des Fahrzeugs vorgenommen werden.

Die Erfindung kommt besonders vorteilhaft zur Geltung bei Konstruktionen, die die Wirkung der Blastwelle einschränken. Diese Reduzierung kann dadurch erreicht werden, dass die Aufhängung der Räder so ausgeführt wird, dass die Blastwelle einer unter dem Rad auslösenden Mine möglichst ohne Widerstandsflächen wie beispielsweise Radkästen entweichen kann.

Die Trennung der Radaufhängung des die Mine auslösenden Rades bedeutet eine definierte Sollbruchstelle, die es ermöglicht, eine definierte Ersatzbaugruppe anzubringen.

Anhand eines Ausführungsbeispieles mit Zeichnung soll die Erfindung näher erläutert werden. Es zeigt
- Fig. 1: eine Skizzendarstellung einer ersten Ausführung,
- Fig. 2: eine skizzenhafte Darstellung einer zweiten Ausführung.

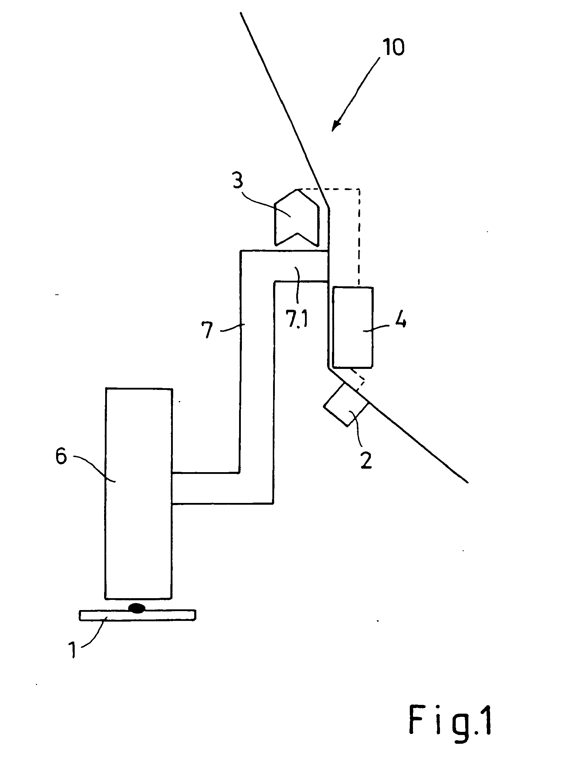

In Fig. 1 sind mit 1 eine Mine, mit 2 ein Sensor, mit 3 eine Schneidladung und mit 4 eine Zünd- und Auswerteeinheit gekennzeichnet. Das Bezugszeichen 6 kennzeichnet ein Rad. Dieses ist über eine Radaufhängung 7 mit einer Fahrzeugstruktur 10 (nicht vollständig dargestellt) verbunden. An der Radaufhängung 7 ist in einer vorgegebenen Position die Schneidladung 3 angebracht. Wird vom Sensor 2 ein Überfahren der Mine 1 detektiert, gelangt diese Information an die Zünd- und Auswerteeinheit 4. Diese löst ebenfalls schnell ein Signal zur Zündung der Schneidladung 3 aus, welche an der Trennstelle 7.1 die Radaufhängung 7 trennt, wodurch noch vor dem Einleiten der Schockwelle auf die Fahrzeugstruktur 10 das Rad 6 vom Fahrzeug getrennt wird.

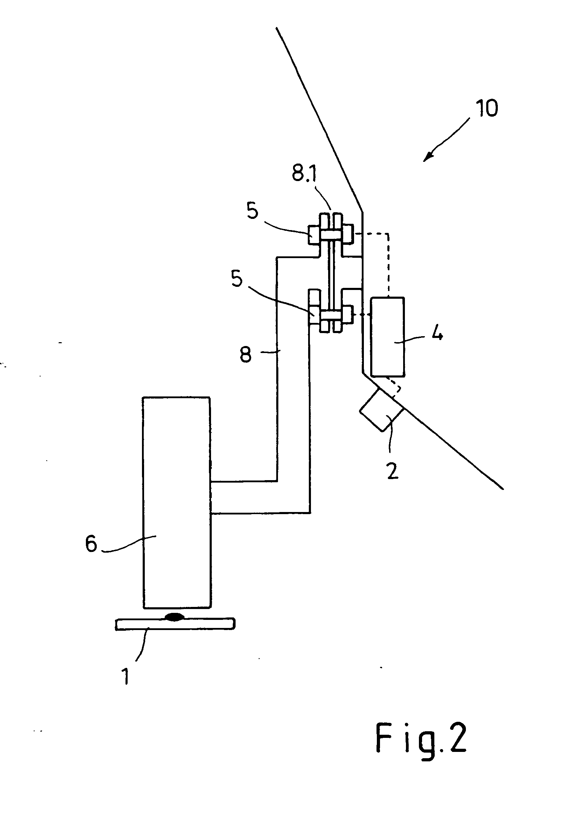

Fig. 2 zeigt eine weitere Ausführungsform. Anstelle der Schneidladung 3 sind hier zwei pyrotechnische Trennschrauben 5 vorgesehen. Diese halten eine besondere Konstruktion der Radaufhängung 8 an der Sollbruchstelle 8.1 zusammen. Ausgelöst wird die Sprengladung der Trennschrauben 5 nach Detektion eines Überfahrens der Mine 1 durch den Sensor 2, der ein Signal an die Zünd- und Auswerteeinheit 4 gibt, die ihrerseits die Zündung veranlaßt.

Der Sensor 2 kann ein optischer , ein Druck- und / oder ein Beschleunigungssensor sein. Der optische Sensor sollte dann einen Lichtblitz detektieren können. Die Druckund / oder Beschleunigungssensoren müssen zudem so angebracht sein, dass die Detektion der Körperschallwelle- und / oder Blastwelle erfolgt, bevor die Körperschallwelle die Sollbruchstelle 7.1 , 8.1 erreicht hat.
Entsprechend der Anzahl der Räder 6 sind zumindest die Sensoren 2 und die Trennmittel 3, 5 zu bestimmen, wobei je Rad 6 wenigstens ein Sensor 2 und ein Trennmittel 3, 5 zuzuordnen sind. Vorteilhaft ist, entsprechend der Anzahl der Räder 6 auch die Anzahl der Zünd- und Auswerteeinheiten 4 vorzusehen.

## Patentansprüche

1. Minenschutzeinrichtung insbesondere für ein Radfahrzeug mit mehreren Rädern (6), **gekennzeichnnet durch** wenigstens einen, zu jedem Rad (6) zugehörigen,Sensor (2) zur Detektion eines Überfahrens einer Mine (1), wenigstens eine Zünd- und Auswerteeinheit (4) zur Verarbeitung der einzelnen Sensorsignale sowie zu jedem Rad (6) zugehörige Trennmittel (3, 5), welche das die Mine (1) überfahrende Rad (6) durch Auftrennung einer Radaufhängung (7, 8) von einer Fahrzeugstruktur (10) trennen.

2. Minenschutzeinrichtung nach Anspruch 1, **dadurch gekennzeichnet, dass** das Trennmittel (3) eine Schneidladung ist.

3. Minenschutzeinrichtung nach Anspruch 1, **dadurch gekennzeichnet, dass** das Trennmittel (5) wenigstens eine pyrotechnische Trennschraube ist.

4. Minenschutzeinrichtung nach einem der Ansprüche 1 bis 3, **dadurch gekennzeichnet, dass** der Sensor (2) wenigstens ein optischer, ein Druck- und / oder ein Beschleunigungssensor ist.

## Claims

1. Mine protection device in particular for a wheeled vehicle having a plurality of wheels (6), **characterized by** at least one sensor (2), which is associated with each wheel (6), for detection of travelling over a mine (1), having at least one detonation and evaluation unit (4) for processing of the individual sensor signals, and having separation means (3, 5) which are associated with each wheel (6), and separate the wheel (6) which is travelling over the mine (1) from a vehicle structure (10) by disconnection of a wheel suspension (7, 8) .

2. Mine protection device according to Claim 1, **characterized in that** the separation means (3) is a cutting charge.

3. Mine protection device according to Claim 1, **characterized in that** the separation means (5) is at least one pyrotechnic separating bolt.

4. Mine protection device according to one of Claims 1 to 3, **characterized in that** the sensor (2) is at least one optical, pressure and/or acceleration sensor.

## Revendications

1. Dispositif de protection contre des mines, en particulier pour un véhicule sur roues comprenant plusieurs roues (6), **caractérisé par** au moins un capteur (2) associé à chaque roue (6) pour détecter le passage sur une mine (1), au moins une unité d'allumage et d'analyse (4) pour traiter les signaux individuels des capteurs ainsi que des moyens de séparation (3, 5) associés à chaque roue (6), lesquels séparent la roue (6) ayant roulé sur la mine (1) en séparant une suspension de roue (7, 8) d'une structure du véhicule (10).

2. Dispositif de protection contre des mines selon la revendication 1, **caractérisé en ce que** le moyen de séparation (3) est une charge découpeuse.

3. Dispositif de protection contre des mines selon la revendication 1, **caractérisé en ce que** le moyen de séparation (5) est au moins une vis de séparation pyrotechnique.

4. Dispositif de protection contre des mines selon l'une quelconque des revendications 1 à 3, **caractérisé en ce que** le capteur (2) est au moins un capteur optique, un capteur de pression et/ou un capteur d'accélération.
